# EUROPEAN PATENT APPLICATION

(11) **EP 1 550 933 A1**
(43) Date of publication of application: **06.07.2005**
(21) Application number: 05006299.1
(22) Date of filing: 28.10.2004
(51) Int. Cl.: G06F 1/00, G06F 9/44

(54) **Securely providing user-specific application versions**

(30) Priority: 31.10.2003 US 698108
(62) Divisional of application: 04025647.1
(71) Applicant: SAP Aktiengesellschaft, 69190 Walldorf (DE)
(72) Inventor: Altenhofen, Michael, 76131 Karlsruhe (DE)
(74) Representative: Müller-Boré & Partner Patentanwälte

(57) **Abstract**

A method provides access to a software application that includes an application core and version-specific functionality. The method includes enabling access to the application core, determining a version of the software application, and providing a module link that corresponds to the version. The module link may be a software interface that enables access to the version-specific functionality.

## Description

### BACKGROUND

This patent application relates generally to processing by a digital computer and, more particularly, to providing versions of software applications securely.

Software applications (or simply "applications") often exist in different versions. For example, applications may be updated to provide new functionality, or applications may be intentionally designed to provide different functionality or features for different users (e.g., a demonstration version, a home version, and a professional version).

Different prices may be associated with each version. A user purchases a version of an application that provides the functionality that best fits the user's needs. In addition, users may be given the opportunity to obtain (e.g., download/purchase) updated versions of applications as new features and upgrades are designed and made available.

A user typically purchases a license to use an application. The license may provide a key that activates functionality associated with the application. The application and/or its security features, however, may be compromised to activate the functionality of the application without the key. This situation is problematic, since it provides unlicensed users with access to the application.

### SUMMARY

In general in one aspect, a method is disclosed for providing access to a software application comprised of an application core and version-specific functionality. The method includes enabling access to the application core, determining a version of the software application, and providing a module link that corresponds to the version. The module link may be a software interface that enables access to the version-specific functionality. This aspect may include one or more of the following features.

The application core may comprise software that is common across multiple versions of the application, and the version-specific functionality may comprise functionality that is specific to the version of the software application. The module link may be encrypted before being provided. The module link may be encrypted with a public key that corresponds to a user of the software application. The method may include receiving the public key.

The module link may enable access to the version-specific functionality by referencing the version specific functionality. The module link may enable access to the version-specific functionality by downloading the version-specific functionality and incorporating the version-specific module into the application core. The module link may comprise configuration settings for the application core.

The foregoing method may include receiving identification information that corresponds to a user of the software application. The version of the software application may be determined using the identification information. The software application may be a content player in an electronic learning system and the version-specific functionality may correspond to at least one of an online content player, an authoring environment content player, and an offline content player.

In general in another aspect, an electronic learning system is disclosed. The electronic learning system includes a first system to provide course content, a second system to provide a content player that presents the course content, and a third system to identify a version of the content player that is to present the course content, and to provide a module link for use with the content player. The module link is for accessing functionality associated with the version of the content player that is to present the course content. This aspect may include one or more of the following features.

The content player may include an application core that contains functionality that is common among different versions of the content player. The application core operates with the functionality accessed by the module link to present the course content.

The first system may include a master repository that stores the course content. The content player may access the content from the master repository. The content player may be provided to a local computer. The local computer may have access to a local repository of course content (e.g., at a remote or local server or system). The content player may access the content from the local repository. The third system may encrypt the module link before providing the module link. The third system may encrypt the module link with a public key that corresponds to a user of the software application.

Other features and advantages will be apparent from the description, the drawings, and the claims.

### DESCRIPTION OF THE DRAWINGS

Figs. 1 and 2 are block diagrams of an exemplary network for providing user-specific application versions.
Fig. 3 is an exemplary implementation of a user specific application.
Fig. 4 is a flow chart of an exemplary process for providing secure user-specific applications.
Fig. 5 is a content aggregation model in an electronic learning system.
Fig. 6 is an example of an ontology of knowledge types for electronic learning.
Fig. 7 is an example of a course graph for electronic learning.
Fig. 8 is an example of a sub-course graph for electronic learning.
Fig. 9 is an example of a learning unit graph for electronic learning.
Fig. 10 is a block diagram of an architecture for the electronic learning system.

Like reference symbols in different figures indicate like elements.

### DETAILED DESCRIPTION

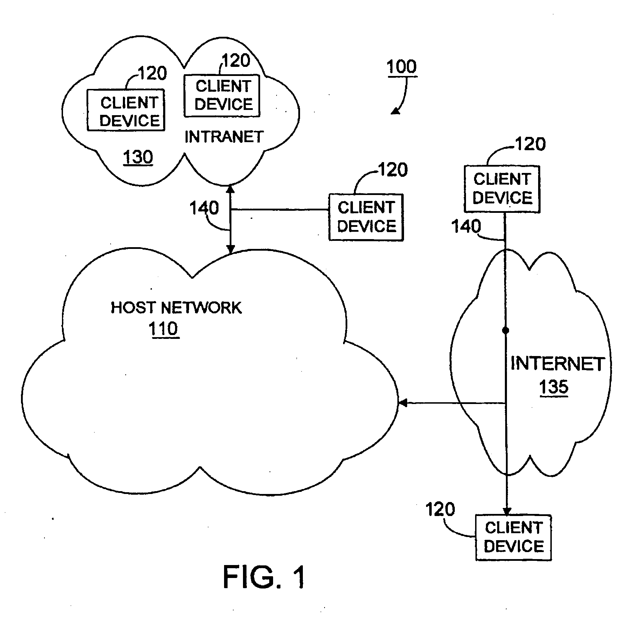

As shown in Fig. 1, a communications system 100 may include a number of networks (e.g., a host network 110, an intranet 130, and the Internet 135) that enable communications between one or more client devices 120. Using communications paths 140 provided by the networks, client devices 120 may connect directly to host network 110, or they may connect indirectly through intranet 130 or the Internet 135.

Host network 110 may be implemented using any number of components and/or network devices (e.g., hubs, routers, switches, servers, repeaters, storage devices, communications interfaces, processors, and various communications media) to establish a local area network (LAN), a wide area network (WAN), a switched network, a radio network, a cable network, a satellite network, or a combination of one more of these networks. Host network 110 may include one or more host devices, such as servers, that provide access to the network and/or to provide online services. Such servers may provide access to software applications and/or application versions, as described in detail below.

Client devices 120 may be operated by one or more users to communicate with host network 110. An example of a client device 120 is a general-purpose computer capable of responding to, and executing instructions in, a defined manner. Client devices 120 may include, but are not limited to, a special-purpose computer, a personal computer ("PC"), a workstation, a server, a laptop, a Web-enabled telephone, a Web-enabled personal digital assistant ("PDA"), an interactive television set, a set top box, an on-board (i.e., vehicle-mounted) computer, or a combination of one or more these devices capable of responding to, generating, and/or executing instructions. Client devices 120 may include any number of other devices, components, and/or peripherals, such as memory/storage devices, input devices, output devices, user interfaces, and/or communications interfaces.

Client devices 120 may communicate with the host network using communications paths 140. Communications paths 140 may be configured to send and receive signals (e.g., electrical, electromagnetic, or optical) that convey or carry data streams representing various types of analog and/or digital content. For example, communications paths 140 may be implemented using various communications media and one or more networks comprising one or more network devices (e.g., servers, routers, switches, hubs, repeaters, and storage devices). The one or more networks may include, but are not limited to, a WAN, a LAN, a plain old telephone service (POTS) line network, a broadband network, a digital subscriber line (DSL) network, an integrated services digital network (ISDN), and a synchronous optical network (SONNET), or a combination of one or more of these networks. In addition, communications paths 140 may include one or more wireless links that transmit and receive electromagnetic signals to convey information. Examples of such wireless links include, but are not limited to, radio, infrared, and microwave signals.

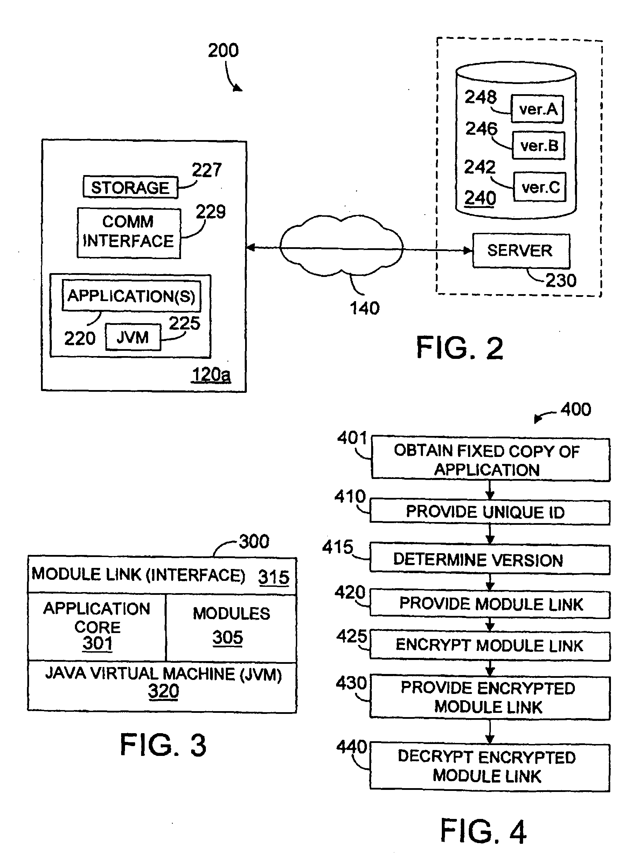

As shown in Fig. 2, client device 120a may include a processor 210 to execute one or more applications (e.g., applications 220, such as an operating system, a browser, or business application, and JAVA virtual machine (JVM) 225). The applications may comprise a computer program, a piece of code, an instruction, or combination thereof, for independently or collectively instructing client device 120a to interact or operate in a prescribed manner.

The applications may be embodied permanently or temporarily in any type of machine, component, physical or virtual equipment, storage medium, or propagated signal or wave capable of providing instructions to client device 120a. The applications may be stored on a storage medium or device 227 (e.g., read only memory (ROM), a random access memory (RAM), a volatile/non-volatile memory, a magnetic disk, or a propagated signal) readable by client device 120a and/or processor 210, such that if the storage medium or device is read by client device 120a, the steps or instructions specified are performed.

Client device 120a may include one or more communications interfaces 229 that allow the client device to send and receive information using communications paths 140. Client device 120a may establish a connection (through communications paths 140) to host network using communications interface 229. Once communications with host network 110 have been established, client device 120a may directly or indirectly transmit data to, and access services from, a host network server 230. For example, client device 120a may establish a connection with server 230 to access different application versions 242 (ver.C), 246 (ver.B), and/or 248 (ver.A) stored in storage medium/media 240. Server 230 may provide an interface (e.g., in conjunction with a browser running on the client device) to view and/or determine which applications are provided by server 230.

Different versions of an application (e.g., ver.A, ver.B, ver.C) may provide different functionality. For example, a "demonstration" version may include limited functionality that is used to demonstrate various features and functions of the application (e.g., to a prospective buyer or to a user of the application). A "home user" version may provide more functionality (typically functionality suited to the majority of users of the application). A "professional" version may provide additional, or different, functionality from the home user version that is specific to, or better suited for, work-related uses. A "deluxe" version may include all functionality of that is capable of being provided by the application. Different prices may be associated with each version (e.g., a demonstration version may be free, a home user version may be less expensive, and a professional/deluxe version may be more expensive).

Applications may be implemented in different ways. In one implementation, an application may be comprised of an application core that implements basic functionality of the application, i.e., functionality that is common to all versions of the application. The application may also include one or more version-specific application modules (or, more generally, version-specific functionality). Each application module may include a set of functions or functionality that is/are unique to a specific version of the application, and that may not already be included in the application core. One or more such application modules may be combined with (e.g., installed in, referenced from, etc.) the application core to implement a version of the application, as described below.

A software interface (the "module link") between the application core and the version-specific modules may be provided. The module link allows the application core to access the functionality of the version-specific module(s) without needing to know how the functionality of each module is implemented. The module link may be implemented in any programming language. For example, the module link may be implemented using libraries with corresponding header files in C/C++, the Win 32 application program interface (API) for Microsoft Windows®, the standard template library in C++, or in Java.

In Java, interfaces are an integrated language construct that allow programmers to describe a functionality or set of functions abstractly. For example, separate classes may be used to implement abstract interfaces. In Java-based implementations, the JVM implementing the application core may search different sources to find the byte code for any particular class that provides a specific implementation of a module link. Various sources may include directories in a file system, zip or Jar files, and/or network locations (e.g., specified by a Uniform Resource Locator ("URL")).

Instead of using an actual software interface, the module link may be one or more files comprising configuration settings for the application. In this case, the application core receives the configurations settings and configures itself accordingly to obtain the desired functionality (modules) in the manner described above.

### Providing A User-Specific Application Version

As noted, when a user "buys" an application, the user typically receives a limited license to use the application. Although applications may include many different security features to prevent unlicensed use, many of these security features may be hacked or compromised. To prevent unauthorized use, an application that is specific to each user may be provided. A user-specific application may be implemented by providing each user with a version of the application that only he or she can use, as described below.

User-specific versions of applications may be provided in a number of ways. In one implementation shown in Fig. 3, a user may purchase an application 300 that includes an application core 301 and a set 305 of all the version-specific modules that provide complete functionality for application 300. Application 300 may be provided to a user on a fixed medium, such as a compact disc. The fixed medium may be accessed by client device 120a (Fig. 2). Application 300 also may be provided by downloading the application to client device 120a (e.g., from server 230 on host network 110).

Following receipt of application 300, module link 315 may be provided to the application's core. Module link 315 acts as an interface between the application core 301 and the functionality provided by modules 305. Module link 315 may limit access to version(s) of the application by only providing access to certain functionality provided by modules 305 (e.g., functionality that is consistent with a specified version). Using the examples given above, a "demonstration" version module link would only provide access to limited modules; a "home user" module link would provide access to more of the modules, and a "deluxe" module link would provide access to all of the modules.

In another implementation, the user could purchase a customized version of an application by specifying the functionality that is desired. In this case, module link 315 can be customized to provide the application core with access to desired functionality only. In still another implementation, only those modules 305 may be provided that enable the functionality corresponding to the purchased version of the application.

Application versions may be protected (i.e., rendered secure from unauthorized use) by encrypting the module link. For example, the module link may be encrypted with a user's public key and then decrypted with the user's private key. This encryption scheme reduces the chances that an unauthorized user will be able to access an application. In addition, a code may be added to the encrypted module link, which can then be decrypted by the application core to prove that the module link is authentic. One example of such a code is an electronic (or digital) signature that may be authenticated to verify the module link.

Fig. 4 shows a process 400 that may be used to obtain a secure user-specific version of an application. According to process 400, a user obtains (e.g., purchases) (401) a copy of an application, e.g., by downloading a copy of the application. To activate the application, the user provides (410) the application provider with a unique identifier. For example, the user may access a server of the application provider and provide the user's public key (e.g., a Verisign public key). In addition, other identification may be provided, such as a credit card number, an account number, and/or a product serial number.

Using this information, the server determines (415) which version of the application has been licensed or purchased by the user. After determining the version, the server provides (420) a module link (corresponding to the desired version) or builds an interface (e.g., if a user customized version was provided). The server encrypts (425) the module link with the user's public key. The encrypted module link is provided (430) to the user and installed in, or accessed by, the application. The module link is decrypted (440) with the user's private key. The module link may then be used by the application core to access version-specific modules needed to provide the desired functionality for the version of the application has been licensed or purchased by the user. The version-specific modules that correspond to this functionality may be at any location, such as the server of the application provider, a Web site of the application provider, or a third party site or server. The version-specific modules may be accessed by simply referencing them or by downloading them and incorporating them into the application core.

The public/private key decryption is difficult to compromise or "hack", thereby making the application less susceptible to unauthorized use. In addition, it is less likely that the user will provide unauthorized copies to other individuals, as this would require the user to provide the user's unique identification or private key to others.

The processes described above may be implemented in any context, and have particularly applicability in the electronic learning ("e-learning") context. Electronic learning refers to computer-based training systems that enable learners to access content electronically, e.g., via a network, such as the Internet, without requiring an intermediary, such as a teacher or tutor. A brief description of an electronic learning system in which the processes may be implemented is provided below, beginning with the content and structure of courses offered.

### Course Content And Structure

The electronic learning system ("ELS") described herein structures course material (i.e., content) so that the content is reusable and flexible. For example, the content structure allows the creator of a course to reuse existing content to create new or additional courses. In addition, the content structure provides flexible content delivery that may be adapted to the learning styles of different users, thereby providing an individualized learning experience.

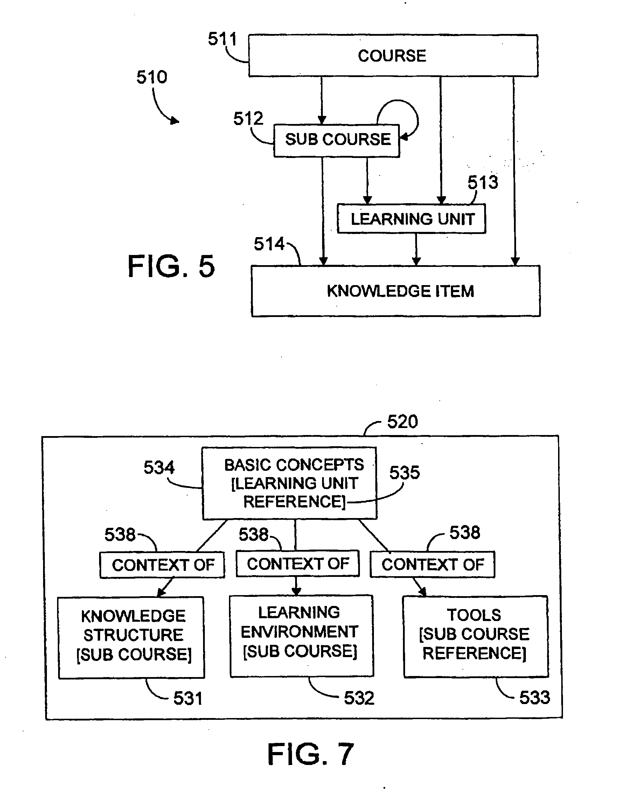

Electronic learning content in the ELS may be aggregated using a number of learning objects arranged at different aggregation levels. Each higher-level learning object may refer to any learning object at a lower level. At its lowest level, a learning object corresponds to content and is not further divisible. In one implementation of the ELS shown in Fig. 5, course material 510 may include four types of learning objects: a course 511, a sub-course 512, a learning unit 513, and a knowledge item 514.

Starting from the lowest level, knowledge items 514 are the basis for the other learning objects and are the building blocks of the course content structure. Each knowledge item 514 may include content that illustrates, explains, practices, or tests an aspect of a thematic area or topic. Knowledge items 514 typically are small in size (i.e., of short duration, e.g., approximately five minutes or less).

Attributes may be used to describe a knowledge item 514, such as, for example, a name, a type of media, and a type of knowledge. The name may be used by the ELS to identify and locate the content associated with a knowledge item 514. The type of media describes the form of the content that is associated with the knowledge item 514. For example, media types include a presentation type, a communication type, and an interactive type. A presentation media type may include text, a table, an illustration, graphics, an image, animation, an audio clip, and/or a video clip. A communication media type may include a chat session, a group (e.g., a newsgroup, team, class, and group of peers), electronic mail, a short message service (SMS), and an instant message. An interactive media type may include a computer based training tool, a simulation, and a test.

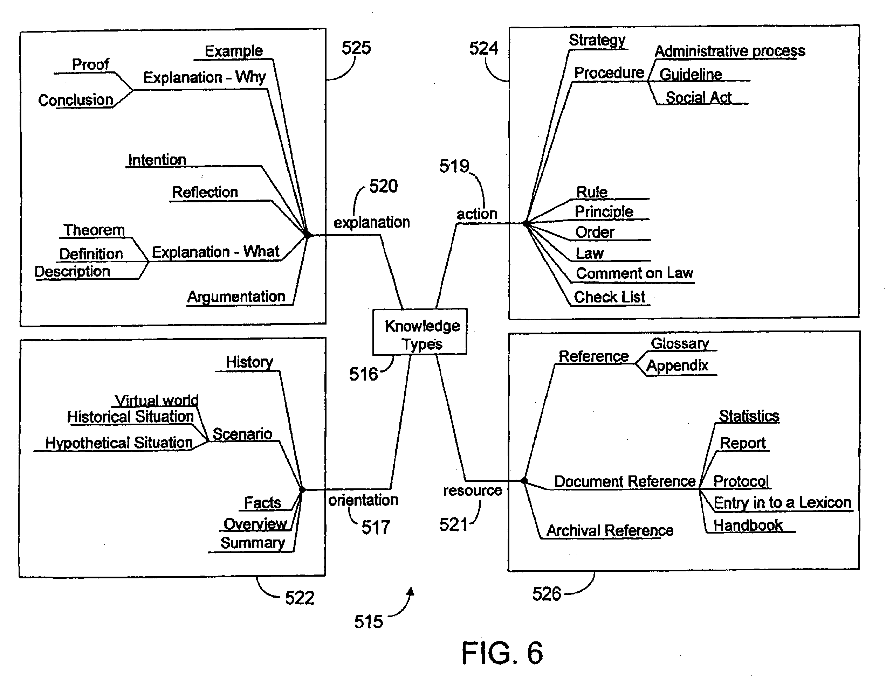

A knowledge item 514 also may be described by the attribute of knowledge type. For example, knowledge types include knowledge of orientation, knowledge of action, knowledge of explanation, and knowledge of source/reference (see Fig. 6). Knowledge types may differ in learning goal and content. For example, knowledge of orientation offers a point of reference to the user, and, therefore, provides general information for a better understanding of the structure of interrelated learning objects.

Knowledge items 514 may be generated using a wide range of technologies. In one implementation, a browser (including plug-in applications) interprets and displays appropriate file formats associated with each knowledge item. For example, markup languages (such as a Hypertext Markup language (HTML), a standard generalized markup language (SGML), a dynamic HTML (DHTML), or an extensible markup language (XML)), JavaScript (a client-side scripting language), and/or Flash may be used to create knowledge items 514.

HTML may be used to describe the logical elements and presentation of a document, such as, for example, text, headings, paragraphs, lists, tables, or image references. Flash may be used as a file format for Flash movies and as a plug-in for playing Flash files in a browser. For example, Flash movies using vector and bitmap graphics, animations, transparencies, transitions, MP3 audio files, input forms, and interactions may be used. In addition, Flash permits pixel-precise positioning of graphical elements to generate interactive applications for presentation of course material to a user.

Learning units 513 may be assembled using one or more knowledge items 514 to represent, for example, a distinct, thematically-coherent unit. Consequently, learning units 513 may be considered containers for knowledge items 514 of the same general topic. Learning units 513 also may be relatively small in size (i.e., small in duration) though larger than a knowledge item 514.

Sub-courses 512 may be assembled using other sub-courses 512, learning units 513, and/or knowledge items 514. Sub-course 512 may be used to split up an extensive course into several smaller subordinate courses. Sub-courses 512 may be used to build an arbitrarily deep nested structure by referring to other sub-courses 512.

Courses may be assembled from all of the subordinate learning objects including sub-courses 512, learning units 513, and knowledge items 514. To foster maximum reuse, all learning objects may be self-contained and context free.

Learning objects may be tagged with metadata that is used to support adaptive delivery, reusability, and search/retrieval of content associated with the learning objects. For example, learning objective metadata (LOM) defined by the IEEE "Learning Object Metadata Working Group" may be attached to individual learning objects. A learning objective is information that is to be imparted by an electronic course, or a subset thereof, to a user taking the electronic course. The learning objective metadata noted above may represent numerical identifiers that correspond to learning objectives. The metadata may be used to configure an electronic course based on whether a user has met learning objectives associated with learning object(s) that make up the course.

As shown in Fig. 6, learning objects may be categorized using a didactical ontology 515 of knowledge types 516 that includes orientation knowledge 517, action knowledge 519, explanation knowledge 520, and resource knowledge 521. Orientation knowledge 517 helps a user to find the way through a topic without acting in a topic-specific manner and may be referred to as "know what". Action knowledge 519 helps a user to acquire topic related skills and may be referred to as "know how". Explanation knowledge 520 provides a user with an explanation of why something is the way it is and may be referred to as "know why". Resource knowledge 521 teaches a user where to find additional information on a specific topic and may be referred to as "know where".

The four knowledge types (orientation, action, explanation, and resource) may be further divided into a fine grained ontology as shown in Fig. 6. Orientation knowledge 517 may refer to sub-types 522 (of knowledge) that include a history, a scenario, a fact, an overview, and a summary. Action knowledge 519 may refer to sub-types 524 that include a strategy, a procedure, a rule, a principle, an order, a law, a comment on law, and a checklist. Explanation knowledge 520 may refer to sub-types 525 that include an example, an intention, a reflection, an explanation of why or what, and an argumentation. Resource knowledge 521 may refer to sub-types 526 that include a reference, a document reference, and an archival reference.

Dependencies between learning objects may be described by metadata in the learning objects. A relation may be used to describe a natural, subject-taxonomic relation between learning objects. A relation may be directional or non-directional. A directional relation may indicate that the relation between learning objects is true only in one direction. Directional relations should be followed. Relations may be divided into two categories: subject-taxonomic and non-subject taxonomic.

Subject-taxonomic relations may be divided into hierarchical relations and associative relations. Hierarchical relations may be used to express a relation between learning objects that have a relation of subordination or superordination. For example, a hierarchical relation between knowledge items A and B exists if B is part of A. Hierarchical relations may be divided into two categories: the part/whole relation (i.e., "has part") and the abstraction relation (i.e., "generalizes"). For example, the part/whole relation "A has part B" describes that B is part of A. The abstraction relation "A generalizes B" implies that B is a specific type of A (e.g., an aircraft generalizes a jet or a jet is a specific type of aircraft).

Associative relations may be used to refer to a kind of relation of relevancy between two learning objects. Associative relations may help a user obtain a better understanding of facts associated with the learning objects. Associative relations describe a manifold relation between two learning objects and are mainly directional (i.e., the relation between learning objects is true only in one direction). Examples of associative relations, described below, include "determines", "side-by-side", "alternative to", "opposite to", "precedes", "context of', "process of'," "values", "means of', and "affinity".

The "determines" relation describes a deterministic correlation between A and B (e.g., B causally depends on A). The "side-by-side" relation may be viewed from a spatial, conceptual, theoretical, or ontological perspective (e.g., A side-by-side with B is valid if both knowledge objects are part of a superordinate whole). The side-by-side relation may be subdivided into relations, such as "similar to", "alternative to", and "analogous to". The "opposite to" relation implies that two learning objects are opposite in reference to at least one quality. The "precedes" relation describes a temporal relationship of succession (e.g., A occurs in time before B (and not that A is a prerequisite of B)). The "context of" relation describes the factual and situational relationship on a basis of which one of the related learning objects may be derived. An "affinity", between learning objects suggests that there is a close functional correlation between the learning objects (e.g., there is an affinity between books and the act of reading because reading is the main function of books).

Non Subject-Taxonomic relations may include the relations "prerequisite of" and "belongs to". The "prerequisite of" and the "belongs to" relations do not refer to the subject-taxonomic interrelations of the knowledge to be imparted. Instead, these relations refer to progression of the course in the learning environment (e.g., as the user traverses the course). The "prerequisite of" relation is directional whereas the "belongs to" relation is non-directional. Both relations may be used for knowledge items 514 that cannot be further subdivided. For example, if the size of a screen is too small to display the entire content on one page, the page displaying the content may be split into two pages that are connected by the relation "prerequisite of'.

Another type of metadata defines competencies. Competencies may be assigned to learning objects, such as, for example, a sub-course 512 or a learning unit 513. Competencies may be used to indicate and evaluate the performance of a user as the user traverses the course material. A competency may be classified as a cognitive skill, an emotional skill, a sensory motor skill, or a social skill.

The content structure associated with a course may be represented as a set of graphs. A learning object may be represented as a node in a graph. Node attributes are used to convey the metadata attached to the corresponding learning object (e.g., a name, a knowledge type, a version number, a competency, and/or a media type). A relation between two learning objects may be represented as an edge.

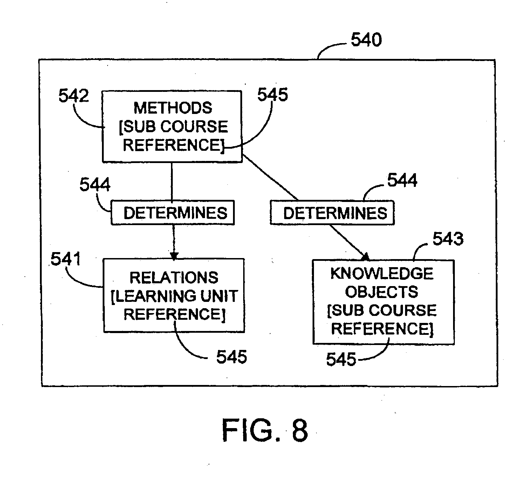

By way of example, Fig. 7 shows a graph 520 for a course. The course is divided into four learning objects or nodes (531, 532, 533, and 534): three sub-courses (e.g., knowledge structure, learning environment, and tools) and one learning unit (e.g., basic concepts). A node attribute 535 of each node is shown in brackets (e.g., the node 534 labeled "Basic concepts" has an attribute that identifies it as a reference to a learning unit). In addition, an edge 538 expressing the relation "context of" has been specified for the learning unit with respect to each of the sub-courses. As a result, the basic concepts explained in the learning unit provide the context for the concepts covered in the three sub-courses.

Fig. 8 shows a graph 540 of the sub-course "Knowledge structure" 531 of Fig. 7. In this example, the sub-course "Knowledge structure" is further divided into three nodes (541, 542, and 543): a learning unit (e.g., on relations) and two sub-courses (e.g., covering the topics of methods and knowledge objects). Edges 544 expressing the relation "determines" are provided between the learning objects (e.g., the sub-course "Methods" determines the sub-course "Knowledge objects" and the learning unit "Relations"). In addition, the attribute 545 of each node is shown in brackets (e.g., nodes "Methods" and "Knowledge objects" have the attribute identifying them as references to other sub-courses; node "Relations" has the attribute of being a reference to a learning unit).

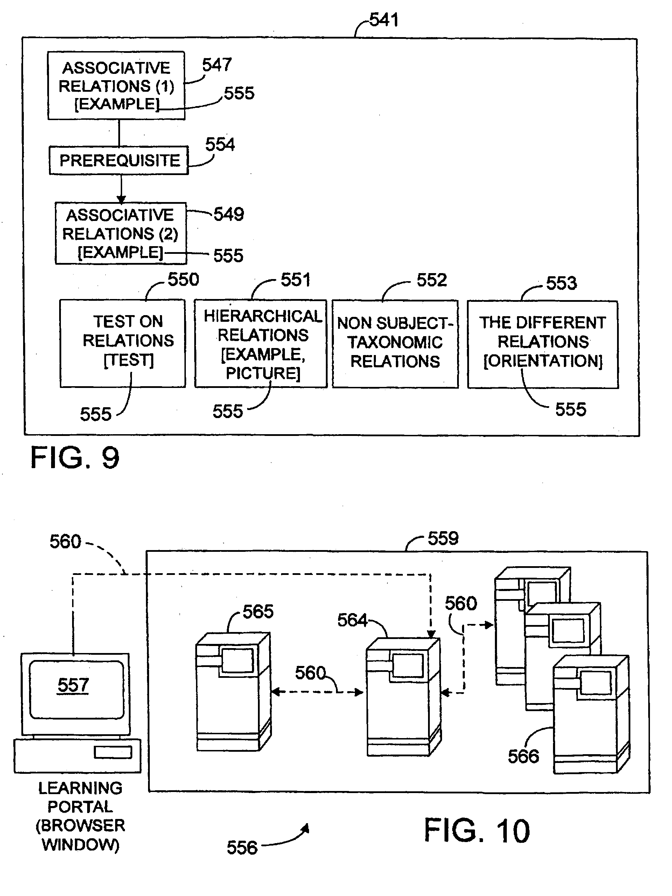

Fig. 9 shows a graph 546 for the learning unit "Relations" 541 shown in Fig. 8. The learning unit includes six nodes (547, 549, 550, 551, 552, and 553): six knowledge items (i.e., "Associative relations (1)", "Associative relations (2)", "Test on relations", "Hierarchical relations", "Non subject-taxonomic relations", and "The different relations"). An edge 554 expressing the relation "prerequisite" has been provided between the knowledge items "Associative relations (1)" and "Associative relations (2)." In addition, attributes 555 of each node are specified in brackets (e.g., the node 551 "Hierarchical relations" includes the attributes 555 "Example" and "Picture").

### Electronic Learning Strategies

The above-described content aggregation and structure associated with a course does not automatically enforce any sequence through which a user may traverse content associated with the course. As a result, different sequencing rules may be applied to the same course structure to provide different paths through the course. The sequencing rules applied to the knowledge structure of a course constitute learning strategies. The learning strategies may be used to pick specific learning objects to be suggested to the user as the user progresses through the course. The user may select from a number of different learning strategies while taking a course. In turn, the selected learning strategy considers both the requirements of the course structure and the preferences of the user.

In a traditional classroom, a teacher determines the learning strategy that is used to learn course material. For example, in this context the learning progression may start with a course orientation, followed by an explanation (with examples), an action, and practice. Using the ELS, a user may choose between one or more learning strategies to determine which path to take through an electronic course. As a result, progressions of different users through the course may differ.

### Course Configuration

The structure of a course is made up of graphs of the learning objects. A navigation tree may be determined from the graphs by applying a selected learning strategy to the graphs. The navigation tree may be used to navigate a path through the course for the user. Only parts of the navigation tree may be displayed to the user at the learning portal based on the position of the user within the course.

Learning strategies are applied to static course structure including learning objects (nodes), metadata (attributes), and relations (edges). This data is created when the course structure is determined (e.g., by a course author). Once the course structure is created, the ELS content player (described below) processes the course structure using a strategy to present the material to the user at the learning portal. The course may be custom-tailored to a user's needs either before or during presentation of the materials.

### Architecture

As shown in Fig. 10 an architecture 556 on which the ELS may be implemented may include a learning station 557 and a learning system 559. A user may access course material using learning station 557 (e.g., a learning portal). Learning station 557 may be implemented using a work station, a computer, a portable computing device, or any intelligent device capable of executing instructions and connecting to a network.

The learning station 557 may include any number of devices and/or peripherals (e.g., displays, memory/storage devices, input devices, interfaces, printers, communication cards, and speakers) that facilitate access to, and use of, course material. A memory (e.g., on a local or remote server) that is accessible to learning station 557 includes a local repository. The local repository stores "local" versions of learning objects, which are accessible to a user, but not throughout the ELS. Use of the local repository in the ELS is described below.

Learning station 557 may execute any number of software applications, including applications that are configured to access, interpret, and present courses and related information to a user. The software may be implemented using a browser, such as, for example, Netscape communicator, Microsoft's Internet explorer, or any other software application that may be used to interpret and process a markup language, such as HTML, SGML, DHTML, or XML. The browser also may include one or more software plug-in applications that allow the browser to interpret, process, and present different types of information. The browser may include any number of application tools, such as, for example, Java, Active X, JavaScript, and Flash.

The browser may be used to implement a learning portal that allows a user to access the learning system 559. Links 560 between learning station 557 and learning system 559, and among various elements of learning system 559 may be configured to send and receive signals (e.g., electrical, electromagnetic, or optical). In addition, the links may be wireless links that use electromagnetic signals (e.g., radio, infrared, to microwave) to convey information between the learning station and the learning system.

The ELS may include one or more servers. As shown in Fig. 10, the learning system 559 includes a learning management system 564, a content management system 565, and an administration management system 566. These systems may be implemented using one or more servers, processors, or intelligent network devices/machines.

The administration management system 566 may be implemented using a server, such as, for example, the SAP R/3 4.6C + LSO Add-On. The administration management system 566 may include a database of user accounts and course information, including ELS configuration information for the user. For example, a user account may include a profile containing demographic data about the user (e.g., a name, an age, a sex, an address, a company, a school, an account number, and a bill) and his/her progress through the course material (e.g., places visited, tests completed, skills gained, knowledge acquired, and competency using the material). The administration management system 566 also may provide additional information about courses, such as the courses offered, the author/instructor of a course, and the most popular courses.

The content management system 565 may include a learning content server. The learning content server may be implemented using a WebDAV server. The learning content server may include a master content repository. The master content repository, also referred to herein as the "master repository", stores the learning objects described above, which are used to present a course to a user at learning station 557. The master repository stores objects that are valid throughout the entire ELS. More specifically, although different versions of objects may be stored in various local repositories, only the objects stored in the master repository may be accessed by any user of the ELS. So long as a user does not need to move object versions to and/or from the master repository, the user can work in a local repository without being connected to the master repository. This work model is termed the "offline scenario". Working in the local repository, while being connected to the master repository, is termed the "online scenario".

The master and local repositories may be managed via a computer program known as the repository explorer. The repository explorer may be run on the learning station, and may communicate with both a local repository and the master repository. Appropriate network connections may be used to effect communication.

The learning management system 564 may include a content player 570. The content player 570 may be implemented using software running on a server, such as, an SAP J2EE Engine. The content player may be run on the learning management system 564 or it may be downloaded to a user's computer and run locally on that computer.

The content player 570 obtains course material (i.e., learning objects) from the local and/or master repositories and presents content from those objects to a user. The content player 570 also applies learning strategies to the obtained course material to generate a navigation tree for the user. The navigation tree is used to suggest a route through the course material for the user and to generate a presentation of course material to the user based on the learning strategy selected by the user. The learning management system 564 also may include an interface for exchanging information with the administration management system 566. For example, the content player 570 may update user-related information as the user progresses through the course material via the interface to the administration management system 566.

The content player 570 may be available in different versions. Each version of the content player includes an application core coupled with one or more version-specific module(s). As explained above, the application core contains the core functionality that is common to all versions of the content player. The version-specific module contains the functionality that is specific to a particular version of the content player, i.e., that is not common across all versions of the content player.

In this implementation, the content player 570 is available in a standard version. The standard version may be used when a user is working online, i.e., connected to the master repository. This version of the content player 570 contains references to the master repository, which enable the content player to retrieve and play content in the master repository. The content player is also available in an authoring environment version. This version is used during development of electronic learning content. The authoring environment version previews newly-created content on an author's computer, thereby enabling the author to "debug" the content. The content player 570 is also available in an offline version. This version of the content player retrieves and plays content from a user's local repository.

With reference to Figure 4, process 400 may be used to obtain the version of the content player that is suited to a user's needs. More specifically, in accordance with process 400, a user obtains access to the content player from, e.g., learning management system 564. As noted, the content player 570 may be run from learning management system 564 or it may be downloaded to, and run from, the user's computer. To activate the content player, the user provides (410) a unique identifier to, e.g., administration management system 566. Administration management system 566 determines (415) which version(s) of the content player has been licensed or purchased by the user.

After determining the version(s), the administration management system 566 provides (420), to the user, a module link for use with the content player. Administration management system 566 encrypts (425) the module link with the user's public key. The encrypted module link is installed in, or accessed by, (430) the content player. The module link may be decrypted (440) with the user's private identifier. The module link may then be used by the application core of the content player to obtain the version-specific modules needed for the content player, e.g., from content management system 565 or any other location such as a Web site for the ELS.

### Other Implementations

The processes described above are not limited to use with the hardware and software descried herein; they may find applicability in any computing or processing environment and with any type of machine that is capable of running machine-readable instructions.

The processes can be implemented in digital electronic circuitry, or in computer hardware, firmware, software, or in combinations of them. The processes can be implemented as a computer program product, i.e., a computer program tangibly embodied in an information carrier, e.g., in a machine-readable storage device or in a propagated signal, for execution by, or to control the operation of, data processing apparatus, e.g., a programmable processor, a computer, or multiple computers. A computer program can be written in any form of programming language, including compiled or interpreted languages, and it can be deployed in any form, including as a stand-alone program or as a module, component, subroutine, or other unit suitable for use in a computing environment. A computer program can be deployed to be executed on one computer or on multiple computers at one site or distributed across multiple sites and interconnected by a communication network.

Method steps of the processes described herein can be performed by one or more programmable processors executing a computer program to perform the foregoing functions. Method steps can also be performed by, and portions of the ELS can be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. Elements of a computer include a processor for executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. Information carriers suitable for embodying computer program instructions and data include all forms of non-volatile memory, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

The processes described herein can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the record extractor, or any combination of such back-end, middleware, or front-end components. The components of the system can be interconnected by any form or medium of digital data communication, e.g., a communication network. Examples of communication networks include a local area network ("LAN") and a wide area network (WAN"), e.g., the Internet.

The computing system can include clients and servers. A client and server are generally remote from each other and typically interact through a communication network. The relationship of client and server arises by virtue of computer programs running on the respective computers and having a client-server relationship to each other.

A number of implementations have been described. Nevertheless, it will be understood that various modifications may be made. For example, advantageous results may be achieved if the steps of the disclosed techniques are performed in a different order and/or if components in a disclosed system, architecture, device, or circuit are combined in a different manner and/or replaced or supplemented by other components.

Other implementations are also within the scope of the following claims.

## Claims

1. A method of providing access to a software application comprised of an application core and version-specific functionality, the method comprising:
enabling access to the application core;
determining a version of the software application; and
providing a module link that corresponds to the version, the module link for enabling access to the version-specific functionality.

2. The method of claim 1, wherein the application core comprises software that is common across multiple versions of the application, and the version-specific functionality comprises functionality that is specific to the version of the software application.

3. The method of claim 1, further comprising:
encrypting the module link before providing the module link.

4. The method of claim 3, wherein the module link is encrypted with a public key that corresponds to a user of the software application.

5. The method of claim 4, further comprising:
receiving the public key used for encrypting the module link.

6. The method of claim 1, wherein the module link enables access to the version-specific functionality
by referencing the version specific functionality, or
by downloading the version-specific functionality and incorporating the version-specific module into the application core.

7. The method of claim 1, wherein the module link comprises configuration settings for the application core.

8. The method of claim 1, further comprising:
receiving identification information that corresponds to a user of the software application;
wherein the version of the software application is determined using the identification information.

9. The method of claim 1, wherein the software application comprises a content player in an electronic learning system and the version-specific functionality corresponds to at least one of an online content player, an authoring environment content player, and an offline content player.

10. A computer program product for providing access to a software application comprised of an application core and version-specific functionality, the computer program product being tangibly embodied in an information carrier, the computer program product being operable to cause a machine to perform a method according to one of the preceding claims.

11. An electronic learning system, comprising:
a first system to provide course content;
a second system to provide a content player that presents the course content; and
a third system to identify a version of the content player that is to present the course content, and to provide a module link for use with the content player, the module link for accessing functionality associated with the version of the content player that is to present the course content.

12. The electronic learning system of claim 11, wherein the content player comprises an application core that contains functionality that is common among different versions of the content player, the application core operating with the functionality accessed by the module link to present the course content.

13. The electronic learning system of claim 11, wherein the first system comprises a master repository that stores the course content.

14. The electronic learning system of claim 12, wherein the content player accesses the content from the master repository.

15. The electronic learning system of claim 11, wherein the content player is provided to a local computer, the local computer having access to a local repository of course content.

16. The electronic learning system of claim 15, wherein the content player accesses the content from the local repository.

17. The electronic learning system of claim 11, wherein the third system encrypts the module link before providing the module link.

18. The electronic learning system of claim 11, wherein the third system encrypts the module link with a public key that corresponds to a user of the software application.
